# EUROPÄISCHE PATENTSCHRIFT

(11) **EP 4 209 433 B1**
(45) Veröffentlichungstag und Bekanntmachung des Hinweises auf die Patenterteilung: **01.10.2025**
(21) Anmeldenummer: 22150961.5
(22) Anmeldetag: 11.01.2022
(51) Int. Cl.: B65G 11/20, B65G 69/16

(54) **VERTIKALFÖRDERER ZUM TRANSPORTIEREN VON STÜCKGÜTERN SOWIE VERFAHREN ZUM VERTIKALEN TRANSPORTIEREN**
VERTICAL CONVEYOR FOR TRANSPORTING PIECE GOODS AND METHOD FOR VERTICAL TRANSPORT
TRANSPORTEUR VERTICAL PERMETTANT DE TRANSPORTER DES MARCHANDISES, AINSI QUE PROCÉDÉ DE TRANSPORT VERTICAL

(43) Veröffentlichungstag der Anmeldung: 12.07.2023
(60) Teilanmeldung: 23212663.1
(73) Patentinhaber: Becton Dickinson Rowa Germany GmbH, 53539 Kelberg (DE)
(72) Erfinder: GROSS, Dietmar, 53539 Kelberg (DE)
(74) Vertreter: Zenz Patentanwälte Partnerschaft mbB

(56) Entgegenhaltungen:
- EP-A2- 1 900 655
- WO-A2-2006/038065
- DE-A1- 10 048 993
- DE-A1- 2 627 511
- DE-C- 555 052
- FR-A1- 2 092 789
- JP-A- 2005 029 294
- US-A- 1 879 944
- US-A- 4 421 226

## Beschreibung

Die vorliegende Erfindung betrifft einen Vertikalförderer zum Transportieren von Stückgütern sowie ein Verfahren zum vertikalen Transportieren von Stückgütern.

Vertikalförderer sind Anlagen aus der Fördertechnik und werden genutzt, um Produktströme (regelmäßig in Form von Stückgütern) nach oben und unten zu transportieren. Vertikalförderer werden auch in Kombination mit vollautomatischen Kommissioniervorrichtungen, beispielsweise zur Lagerung von Verbrauchsgütern aus dem Medizinbereich (Arzneimittelpackungen, Nahrungsergänzungsmittelpackungen, verpacktes Verbandsmaterial etc.), in Apotheken verwendet.

Ein großer Vorteil der vollautomatischen Kommissioniervorrichtungen ist, dass auf einer bestimmten Grundfläche mehr Stückgüter gelagert werden können als dies mit manuell betriebenen Lagersystemen möglich ist. Bei Arzneimitteln war es früher in Apotheken üblich, diese sortenrein in horizontal ausziehbaren Schubladen zu lagern und bei Bedarf manuell zu entnehmen. Aufgrund der Vielzahl und Tiefe der Schubladen ist bei Verwendung des manuellen Lagersystems ein großer Lagerraum notwendig - das Offizin ist dann regelmäßig deutlich kleiner als der Lagerraum selbst.

Zwar ist durch die Verwendung der vollautomatischen Kommissioniervorrichtungen ein Raumgewinn möglich, jedoch wird auch bei Verwendung von Kommissioniervorrichtungen noch eine relativ große Grundfläche benötigt. Da moderne Kommissioniervorrichtungen vollautomatisch betrieben werden, ist ein schneller Zugriff auf die Vorrichtungen selbst und die in diesen gelagerten Stückgüter nicht mehr so wesentlich, so dass dazu übergegangen wird, die Kommissioniervorrichtungen in einer Etage über dem Offizin aufzustellen - auf diese Weise kann man das Offizin größtmöglich gestalten.

Herkömmliche Vertikalförderer für Apotheken sind insbesondere Wendelrutschen oder Lifte. Wendelrutschen haben den Nachteil, dass sie relativ viel Platz benötigen, beispielsweise einen Durchmesser von etwa 60 cm haben. Die bekannten Lifte sind aufwendig und wartungsintensiv. Die vorgenannten Vertikalförderer haben ferner den Nachteil, dass die Übergabe von Packungen von der Kommissioniervorrichtung an den Vertikalförderer oftmals mit einer Beschädigung der Packungen selbst einhergeht, was insbesondere bei Arzneimittelpackungen vermieden werden soll, da beschädigte Packungen bei einem Patienten regelmäßig negative Assoziationen wecken.

Aus der FR 2 092 789 A1 ist ein Vertikalförderer zum Transportieren von Stückgütern bekannt. Der Vertikalförderer weist folgendes auf: eine Rahmenstruktur mit einem Aufnahmeabschnitt und einem Abgabeabschnitt für Stückgüter, eine vertikal ausgerichtete Leiteinrichtung zum geführten vertikalen Bewegen von Stückgütern mit einem ersten Führungsmittel mit einem reversibel verformbaren Material und zumindest einem zweiten Führungsmittel, wobei das erste Führungsmittel bei dem Abgabeabschnitt an der Rahmenstruktur befestigt ist, eine vertikal zwischen Aufnahmeabschnitt und Abgabeabschnitt verfahrbare Trageinheit mit zumindest einem horizontal zwischen einer Schließstellung und einer Freigabestellung verfahrbaren Tragarm, wobei der Tragarm das erste Führungsmittel zumindest abschnittweise umfasst und wobei das erste und zweite Führungsmittel der Leiteinrichtung und der Tragarm derart ausgebildet sind, dass der Tragarm das erste Führungsmittel bei einer Vertikalbewegung des Tragarms zumindest teilweise reversible verformt und in der Schließstellung aus dem ersten Führungsmittel und dem zweiten Führungsmittel einen von einem Stückgut zumindest abschnittsweise reversibel verformbaren Dämpfungsabschnitt formt, der eine Abwärtsbewegung des Stückguts verhindert.

Es ist Aufgabe der vorliegenden Erfindung, einen Vertikalförderer und ein Verfahren zum vertikalen Transportieren von Stückgütern bereitzustellen, bei welchem Stückgüter schonend transportiert werden und der konstruktiv unkompliziert und damit wartungsarm ist.

Die Aufgabe wird gelöst durch einen Vertikalförderer zum Transportieren von Stückgütern nach Anspruch 1. Der erfindungsgemäße Vertikalförderer umfasst eine Rahmenstruktur mit einem Aufnahmeabschnitt und einem Abgabeabschnitt für Stückgüter, eine vertikal ausgerichtete Leiteinrichtung zum geführten vertikalen Bewegen von Stückgütern mit einem ersten Führungsmittel aus einem reversibel verformbaren Material und zumindest einem zweiten Führungsmittel, wobei das erste Führungsmittel bei dem Aufnahmeabschnitt und dem Abgabeabschnitt an der Rahmenstruktur befestigt ist, und eine reversibel zwischen dem Aufnahmeabschnitt und dem Abgabeabschnitt verfahrbare Trageinheit mit zumindest einem horizontal zwischen einer Schließstellung und einer Freigabestellung verfahrbaren Tragarm.

Es ist vorgesehen, dass der Tragarm das erste Führungsmittel zumindest abschnittweise umfasst und dass das erste und zweite Führungsmittel der Leiteinrichtung und der Tragarm derart ausgebildet sind, dass der Tragarm das erste Führungsmittel bei einer Vertikalbewegung des Tragarms zumindest teilweise reversible verformt und in der Schließstellung aus dem ersten Führungsmittel und dem zweiten Führungsmittel einen von einem Stückgut zumindest abschnittsweise reversibel verformbaren Dämpfungsabschnitt formt, der eine Abwärtsbewegung des Stückguts verhindert.

Bei dem erfindungsgemäßen Vertikalförderer werden die Stückgüter also nicht einfach beispielsweise in eine Transportwanne oder an eine Rutsche übergeben, die bei Kontakt mit den Stückgütern diese beschädigen kann, sondern es wird ein Dämpfungsabschnitt bereitgestellt, der den Aufprall der Stückgüter dämpft und die Stückgüter schonend aufnimmt.

Bei dem erfindungsgemäßen Vertikalförderer ist dieser Dämpfungsabschnitt nicht durch ein definiertes Bauteil bereitgestellt, dass zwischen einer Aufnahme- und einer Abgabeposition bewegt wird, sondern wird durch eine Verformung eines Abschnitts des reversibel verformbaren Materials des ersten Führungsmittels der Leiteinrichtung in Zusammenspiel mit dem zweiten Führungsmittel bereitgestellt, und zwar indem der Tragarm das reversible verformbare Material horizontal zu dem zweiten Führungsmittel bewegt, wodurch sich der nach unten geschlossene Dämpfungsbereich bildet.

Um die Dämpfungseigenschaft zu erreichen, ist es notwendig, das erste Führungsmittel entweder entsprechend in dem Vertikalförderer anzuordnen und/oder das reversibel verformbare Material (des ersten Führungsmittels) mit zusätzlichen Materialeigenschaften zu versehen, es beispielsweise elastisch auszubilden.

Der bzw. die Tragarm(e) der Trageinheit des Vertikalförderers ist bzw. sind horizontal verfahrbar, um bei dem Aufnahmeabschnitt einen Dämpfungsabschnitt auszubilden, welcher Stückgüter aufnimmt. Bei der Abwärtsbewegung der Trageinheit bleibt ein Tragarm zumindest so weit hin zu dem zweiten Führungsmittel bewegt (also ggf. auch zu einem zweiten Tragarm), dass ein Durchrutschen von Stückgütern verhindert ist, und das reversibel verformbare Material bewegt sich an einem Tragarm vorbei, der Dämpfungsabschnitt wird also mit Bewegung der Trageinheit ebenfalls vertikal verlagert. Erreicht die Trageinheit den Abgabeabschnitt des Vertikalförderers ist es zum Abgeben des oder der Stückgüter notwendig, die Führungsmittel voneinander zu lösen - entweder indem die Tragarme aufgefahren werden oder indem ein Tragarm von dem zweiten Führungsmittel fortbewegt wird. Der Dämpfungsabschnitt ist zu öffnen bzw. aufzulösen, so dass die Stückgüter abgegeben werden können.

Ein weiterer Vorteil des erfindungsgemäßen Vertikalförderers ist es, dass dieser aufgrund seiner Konstruktion mit dem reversibel verformbaren Material und dem sich "bewegenden" Dämpfungsabschnitt ausgesprochen geräuscharm betrieben werden kann. Kunden in einem Offizin werden also durch den Betrieb nicht belästigt.

Wie oben beschrieben, ist es vorgesehen, dass der erfindungsgemäße Vertikalförderer einen oder zwei Tragarme umfasst. Wesentlich ist, dass aus dem ersten und dem zweiten Führungsmittel ein Dämpfungsabschnitt ausgebildet werden kann, der eine Vertikalbewegung eines Stückgutes verhindert und dessen Aufprall dämpft. Im nachfolgenden wird regelmäßig von "einem" Tragarm gesprochen, wobei das Ausgeführte bei einem Vertikalförderer mit zwei Tragarmen für beide Tragarme gilt.

Um einen Tragarm horizontal zu bewegen, ist es denkbar, die Trageinheit mit einem entsprechenden Antrieb zu versehen, der für eine Horizontalbewegung eines Tragarms sorgt. Dies hat jedoch den Nachteil, dass die Konstruktion der Trageinheit aufwendiger und fehleranfälliger ist. Darüber hinaus erhöht sich durch das Verbauen eines Antriebs zum horizontalen Bewegen eines Tragarms das Gewicht der Trageinheit selbst. Erfindungsgemäß ist es daher vorgesehen, dass dieser eine vertikal ausgerichtete Tragarmstelleinrichtung mit einer Positionierungsausnehmung aufweist, und dass ein Tragarme einen Betätigungsabschnitt aufweist, der in die Positionierungsausnehmung eingreift, wobei die Positionierungsausnehmung einen Zuhalteabschnitt und zumindest einen Öffnungsabschnitt aufweist, wobei ein Öffnungsabschnitt bei einer Vertikalbewegung der Trageinheit eine horizontale Bewegung eines Tragarms bewirkt. Bei dieser Ausführungsform wird die Bewegung eines Tragarms also nicht über die Trageinheit selbst gesteuert, sondern "von außen" über die Tragarmstelleinrichtung, die sich entlang der Leiteinrichtung erstreckt. Da der Betätigungsabschnitt eines Tragarme in die Positionierungsausnehmung eingreift, bedingt die Formgebung der Positionierungsausnehmung bei einer Vertikalbewegung der Trageinheit die Horizontalbewegung eines Tragarms. Auf diese Weise ist es möglich, eine baulich einfache Trageinheit zu verwenden, die keinen eigenen Antrieb für die Horizontalbewegung eines Tragarme benötigt. Das Vorsehen der Positionierungsausnehmung und eines Betätigungsabschnitts bei einem Tragarm stellt ein mechanisch einfaches und fehlerunanfälliges System zum Bewegen beziehungsweise Positionieren eines Tragarms dar.

Um die Öffnungsbewegung eines Tragarms besonders reibungsfrei und schonend zu gestalten, ist es erfindungsgemäß ferner vorgesehen, dass ein Tragarm schwenkbar an der Trageinheit befestigt und ein Öffnungsabschnitt der Positionierungsausnehmung kreisbogenförmig ausgebildet ist.

Die Leiteinrichtung umfasst zwei Führungsmittel, wobei zumindest ein Führungsmittel reversibel verformbares Material umfasst. Das zweite Führungsmittel kann unterschiedlich ausgebildet sein - so kann es beispielsweise durch einen vertikalen Gehäuseabschnitt des Vertikalförderers bereitgestellt sein. In einem solchen Fall wird der Dämpfungsabschnitt geformt, indem der Tragarm das erste Führungsmittel (also das reversibel verformbare Material des Führungsmittels) an die Gehäusewand drückt oder zumindest so nah an diese bewegt, dass ein Stückgut vertikal gehalten ist.

In einem solchen Fall ist es auch angezeigt, dass die Stückgüter in einer definierten Art und Weise an den Vertikalförderer übergeben werden, nämlich so, dass diese im Bereich des ersten Führungsmittel aufprallen (und dabei gedämpft werden).

Um auch eine Dämpfungseigenschaft bei dem zweiten Führungsmittel bereitzustellen, ist es bei Verwendung von einem Tragarm bevorzugt, dass das zweite Führungsmittel zumindest abschnittsweise eine reversibel verformbare Beschichtung aufweist.

Bei einer alternativen Ausführungsform, die besonders gute Dämpfungseigenschaften für das zu transportierende Stückgut bereitstellt, ist es vorgesehen, dass der Vertikalförderer zwei Tragarme umfasst und dass auch das zweite Führungsmittel ein reversibel verformbares Material umfasst. In diesem Fall sind die Tragarme und das erste und zweite Führungsmittel der Leiteinrichtung derart ausgebildet, dass die Tragarme bei einer Vertikalbewegung die Führungsmittel reversibel verformen und in der Schließstellung aus dem ersten Führungsmittel und dem zweiten Führungsmittel einen von einem Stückgut zumindest abschnittsweise reversibel verformbaren Dämpfungsabschnitt formen, der eine Abwärtsbewegung des Stückguts verhindert.

Wenn das reversibel verformbare Material beispielsweise durch zwei im Wesentlichen parallel zueinander ausgerichtete Textilgewebebahnen bereitgestellt und von den Tragarmen umfasst ist, und diese zusammengefahren sind (Schließstellung), hat der Dämpfungsabschnitt einen ansatzweise U- oder V-förmigen Querschnitt, und zwar in Abhängigkeit von der "Spannung" der Textilgewebebahnen.

Wie bereits oben dargelegt, ist es für die Erfindung wesentlich, dass über die Ausgestaltung der Führungsmittel der Leiteinrichtung und des zumindest einen Tragarms ein Dämpfungsabschnitt bereitgestellt werden kann. Ferner ist es vorgesehen, dass ein Tragarm im zugefahrenen Zustand an dem reversiblen Material eines Führungsmittels vorbeigeführt wird. Um beispielsweise die Klemmkraft, die ein Tragarm auf das reversibel verformbare Material ausübt, einzustellen und ein schonendes Bewegen eines Tragarms entlang des reversibel verformbaren Materials zu ermöglichen, ist es bei einer bevorzugten Ausführungsform vorgesehen, dass ein Tragarm in einem Kontaktbereich mit dem reversiblen Material eines Führungsmittel zumindest eine drehbare Laufrolle aufweist. Über ein Einstellen des Drehwiderstandes ist es beispielsweise möglich, die Dämpfungseigenschaften des Dämpfungsabschnittes einzustellen. Wird der Drehwiderstand der Laufrollen überwunden drehen sich diese, reversibel verformbares Material wird in den Dämpfungsabschnitt hineingezogen und Teil des Dämpfungsabschnitts.

Die Leiteinrichtung des erfindungsgemäßen Vertikalförderers umfasst notwendigerweise eine erstes Führungsmittel mit bzw. aus einem reversibel verformbaren Material. Bei einer konstruktiv besonders einfachen Ausführungsform, bei der beide Führungsmittel reversibel verformbares Material umfassen bzw. daraus bestehen, ist es vorgesehen, dass das reversibel verformbare Material durch zwei parallele vertikal ausgerichtete Stoffbahnen bereitgestellt ist, die jeweils bei dem Aufnahmeabschnitt und dem Abgabeabschnitt an der Rahmenstruktur befestigt sind.

Neben den oben bereits beschriebenen Möglichkeiten, den Dämpfungsabschnitt mit seinen speziellen Eigenschaften bereitzustellen, ist es alternativ oder zusätzlich bei einer Ausführungsform der Leiteinrichtung vorgesehen, dass ein Führungsmittel vorgespannt bei dem Aufnahmeabschnitt und/oder dem Abgabeabschnitt an der Rahmenstruktur, beispielsweise mittels einer oder mehrerer Federn, befestigt ist.

Wie bereits oben dargelegt, werden bei dem Erreichen des Abgabeabschnittes das oder die in dem Dämpfungsabschnitt angeordnete(n) Stückgut bzw. Stückgüter abgegeben, indem der Dämpfungsabschnitt aufgefahren wird. Bei einem senkrecht ausgerichteten Vertikalförderer bedeutet dies, dass die Stückgüter über eine Bodenöffnung schwerkraftbedingt nach unten fallen können. Da dies jedoch wieder die Gefahr einer Beschädigung der Stückgüter erhöht, ist es bei einer bevorzugten Ausführungsform des Vertikalförderers vorgesehen, dass dieser eine Ableiteinrichtung umfasst, mit welcher Stückgüter seitlich abgeführt werden können. In diesem Zusammenhang kann es besonders bevorzugt sein, dass diese Ableiteinrichtung ein verstellbares Ableitmittel umfasst, so dass die Stückgüter beispielsweise zu zwei gegenüberliegenden Seiten abgeführt werden können.

Um die Vertikalbewegung der Trageinheit zu bewirken, kann es vorgesehen sein, dass die Trageinheit selbst einen Antrieb umfasst. Bei einer bevorzugten Ausführungsform ist es jedoch vorgesehen, dass der Vertikalförderer einen Riemenantrieb mit einem vertikal angeordneten Treibriemen umfasst, der mit der Trageinheit gekoppelt ist und diese vertikal bewegt. In einem solchen Fall kann der Antrieb selbst an eine andere Stelle des Vertikalförderers ausgelagert werden, so dass sich das Gewicht der Trageinheit nicht unnötig erhöht. Darüber hinaus ist es von Vorteil, dass der Antrieb selbst ruhend gelagert ist, und nicht ständig mit dem Vertikalförderer bewegt wird.

Die Aufgabe wird ferner gelöst durch ein Verfahren nach Anspruch 10. Bei dem erfindungsgemäßen Verfahren zum Transportieren von Stückgütern wird bei einem Aufnahmeabschnitt einer Rahmenstruktur eines Vertikalförderers aus einem ersten Führungsmittel mit einem reversibel verformbaren Material und zumindest einem zweiten Führungsmittel ein Dämpfungsabschnitt mit einem Dämpfungsbereich für Stückgüter bereitgestellt, indem eine vertikal verfahrbare Trageinheit mit zumindest einem horizontal verfahrbaren Tragarm, der das erstes Führungsmittel aus einem reversibel verformbares Material zumindest abschnittsweise umfasst, zu dem Aufnahmeabschnitt bewegt und der Tragarm horizontal hin zu dem zweiten Führungsmittel in eine Schließstellung bewegt wird, die eine Vertikalbewegung von Stückgütern verhindert.

Anschließend wird zumindest ein Stückgut dem Dämpfungsbereich des Dämpfungsabschnitt übergeben, wobei das zumindest eine Stückgut das reversibel verformbare Material verformt und das reversibel verformbare Material einen Aufprall des Stückguts dämpft. Sind alle Stückgüter übergeben, wird die Trageinheit in der Schließstellung zu einem Abgabeabschnitt der Rahmenstruktur bewegt, wobei bei dem Bewegen der Trageinheit ein das reversibel verformbare Material zumindest abschnittsweise umfassender Tragarm das reversibel verformbare Material bei der Bewegung kontinuierlich umformt und so den Dämpfungsabschnitt nach unten bewegen. Der Dämpfungsbereich wird dabei quasi ständig neu geschaffen - andere Abschnitte des reversibel verformbaren Materials übernehmen bei dem Bewegen der Trageinheit nach unten die Funktion des Dämpfungsabschnitts. Streng genommen wandelt sich auch die Funktion - war es bei Überhabe der Stückgüter die Funktion des Dämpfungsabschnitts den Aufprall der Stückgüter zu dämpfen und eine Beschädigung dieser zu vermeiden, ist es bei der Bewegung nach unten "nur noch" die Funktion des Dämpfungsabschnitts die Stückgüter zu halten.

Bei dem Erreichen des Abgabeabschnitts wird der Tragarm in eine Freigabestellung aufgefahren, so dass das zumindest eine Stückgut durch die sich bildende Öffnung abgegeben wird.

Im nachfolgenden werden bevorzugte Ausführungsformen des erfindungsgemäßen Vertikalförderers und des Verfahrens zum vertikalen Transportieren unter Bezugnahme auf die Zeichnung beschrieben, in welcher
Figuren 1a und 1b Schrägansichten einer ersten Ausführungsform zeigen, wobei bei Figur 1b eine vordere Wand fortgelassen ist,
Figur 2 eine Schrägansicht von hinten zeigt,
Figur 3 eine Vorderansicht ohne vordere Wand zeigt,
Figur 4 eine Schrägansicht von hinten zeigt, wobei die seitlichen Wände fortgelassen sind,
Figur 5 eine Schrägansicht von vorne zeigt, wobei die seitlichen Wände fortgelassen sind,
Figur 6 eine Schrägansicht von vorne zeigt, wobei die seitlichen Wände fortgelassen sind und die Trageinheit nach oben in die Schließstellung gefahren ist,
Figur 7 eine Schrägansicht von vorne zeigt, wobei zusätzlich das reversibel verformbare Material der Leiteinrichtung fortgelassen ist,
Figur 8 eine Detailrückansicht des Abgabeabschnitts zeigt,
Figur 9 eine Detailschrägansicht des Abgabeabschnitts zeigt,
Figuren 10a, 10b Detailansichten der Trageinheit in Kombination mit dem reversibel verformbaren Material der Leiteinrichtung zeigen,
Figuren 11a, 11b und 12a, 12b Detailansichten der Trageinheit zeigen,
Figur 13 eine Detailansicht des Abgabebereichs zeigt,
Figuren 14a - 14d verschiedene Stadien einer ersten Ausführungsform des Verfahrens zum vertikalen Transportieren zeigen, und
Figuren 15a - 15d verschiedenen Stadien einer zweiten Ausführungsform des Verfahrens bei einer weiteren Ausführungsform des Vertikalförderers zeigen.

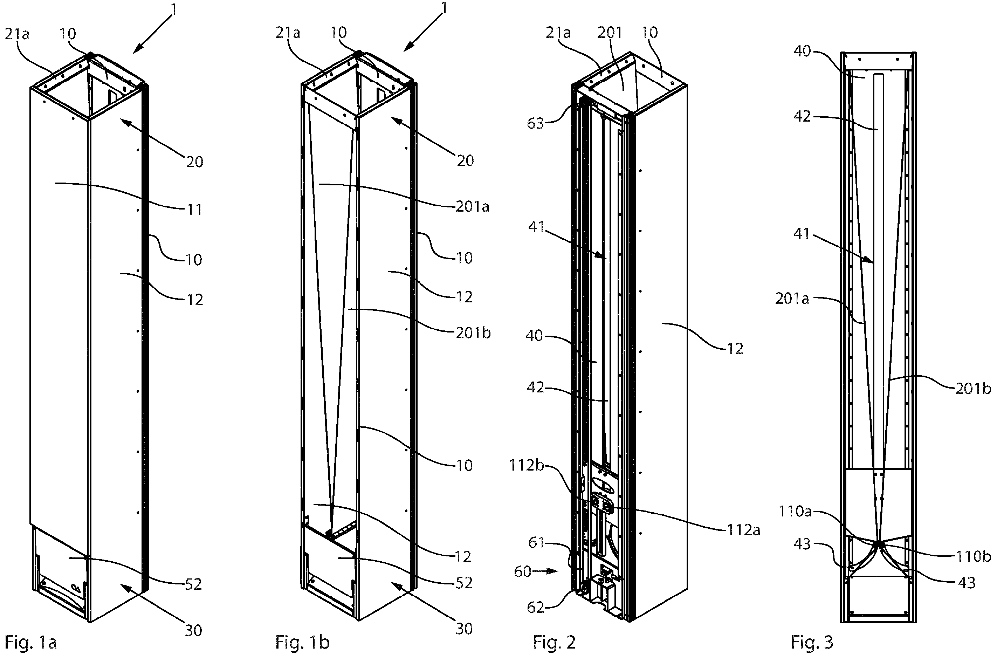

Die Figuren 1 - 7 zeigen (oben näher beschriebene) Ansichten einer ersten Ausführungsform des erfindungsgemäßen Vertikalförderers 1. Dieser umfasst eine Rahmenstruktur 10 mit einer vorderen Wand 11 und zwei seitlichen Wänden 12. Die Rahmenstruktur 10 umfasst einen Aufnahmeabschnitt 20 und einen Abgabeabschnitt 30, wobei diese keine speziellen Bauteile des Vertikalförderers sind, sondern die Abschnitte bezeichnen, bei denen dem Vertikalförderer Stückgüter zugeführt werden (Aufnahmeabschnitt) und bei welchem dieser Stückgüter abgibt (Abgabeabschnitt). Der Vertikalförderer umfasst in seinem Inneren eine Leiteinrichtung 200 mit einem ersten und einem zweiten Führungsmittel 201a, 201b. Bei der gezeigten Ausführungsform bestehen die beiden Führungsmittel 201a, 201b aus einem reversibel verformbare Material. Bei dieser Ausführungsform wird das reversibel verformbare Material durch zwei im Wesentlichen parallele Textilgewebebahnen bereitgestellt.

Bei alternativen Ausführungsformen kann das erste und/oder das zweite Führungsmittel auch nur abschnittsweise als reversibel verformbares Material ausgebildet sein, dieses also "nur" umfassen.

Das erste und das zweite Führungsmittel 201a, 201b (nachfolgend "die Führungsmittel") sind bei dem Aufnahmeabschnitt 20 und dem Abgabeabschnitt 30 über jeweils zwei Halterungen 21a, 21b, 31a, 31b an der Rahmenstruktur 10 befestigt. Die beiden Halterungen 31a, 31b sind darüber hinaus über eine Feder 32 gehalten, so dass die Führungsmittel 201a, 201b bei Aufprall eines Stückgutes nachgeben können (wenn die Führungsmittel 201a, 201b ansonsten "straff" gespannt sind). Ferner können die Federn dazu dienen, für einen Längenausgleich zu sorgen, so dass die die Führungsmittel 201a, 201b stets an ihnen zugeordneten Tragarmen 110a, 110b anliegen - diese Funktionalität ist aber nicht bei allen Ausführungsformen notwendig, beispielsweise wenn das reversibel verformbare Material auch elastische Eigenschaften aufweist.

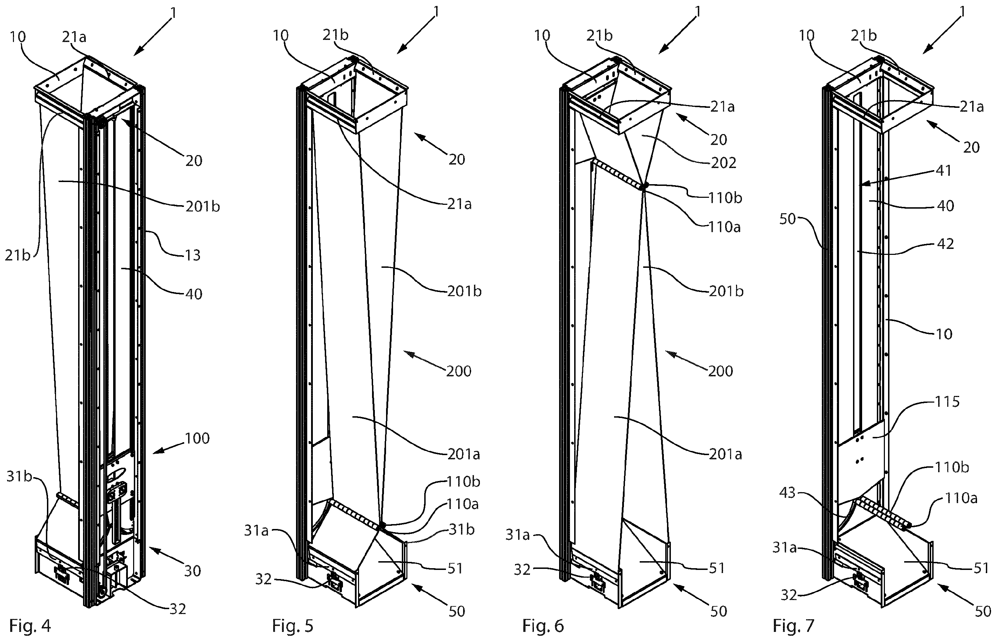

Die Führungsmittel 201a, 201b werden von den zwei Tragarmen 110a, 110b umfasst, wie dies beispielsweise in den Figuren 5 und 6 gut zu erkennen ist. Bei diesen Figuren sind die Tragarme in der "Schließstellung" - sie sind horizontal zusammengefahren und schließen oder klemmen die Führungsmittel 201a, 201b (also das reversibel verformbare Material dieser in Form von Textilgewebebahnen) zwischen sich ein. Dadurch bilden sie einen Dämpfungsabschnitt 202. In Figur 6 ist dieser Dämpfungsabschnitt 202 beim Aufnahmeabschnitt 20 zu erkennen. Bei dieser speziellen Ausführungsform ist der gesamte Dämpfungsabschnitt als Dämpfungsbereich 203 ausgebildet, da beide den Dämpfungsabschnitt 202 bildenden Bereiche der Führungsmittel 201a, 201b als reversibel verformbares Material ausgeführt sind. Bei einer alternativen Ausführungsform kann lediglich ein Teil des Dämpfungsabschnitt 202 dämpfende Eigenschaften haben, i.e. der Dämpfungsabschnitt ist nicht vollständig als Dämpfungsbereich ausgebildet. In dieser Stellung werden dem Dämpfungsabschnitt 202 Stückgüter zugeführt, wie es bei der Beschreibung des erfindungsgemäßen Verfahrens näher dargelegt wird. Die Tragarme 110a, 110b sind Teil einer Trageinheit 100, die bei der gezeigten Ausführungsform an zwei hinteren Rahmenstreben vertikal verfahrbar gelagert ist.

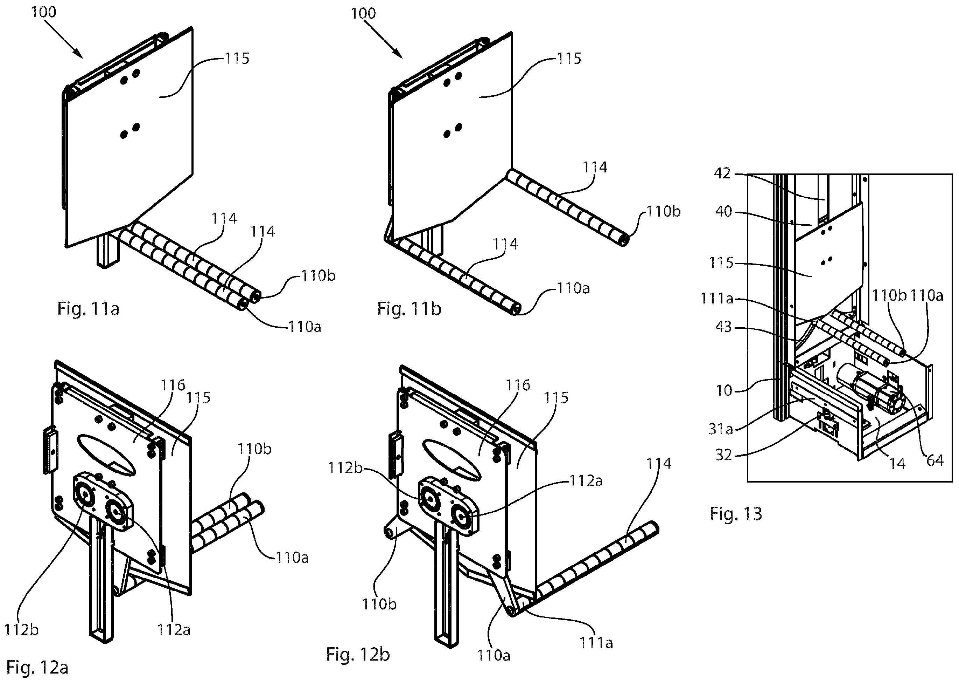

Zwischen den Rahmenstreben 13 ist eine Tragarmstelleinrichtung 40 angeordnet. Diese umfasst eine Positionierungsausnehmung 41 (bei der gezeigten Ausführungsform durchdringt diese die Tragarmstelleinrichtung vollständig), durch die sich Betätigungsabschnitte 111a, 111b der Tragarme 110a, 110b erstrecken, wie dies insbesondere in Figur 13 zu erkennen ist. Wie dies insbesondere in den Figuren 3 und 7 zu erkennen ist, umfasst die Positionierungsausnehmung 41 einen vertikalen Zuhalteabschnitt 42 und zwei bogenförmig verlaufende Öffnungsabschnitte 43, die sich von dem Zuhalteabschnitt 42, der in der Mitte der Tragarmstelleinrichtung 40 verläuft, bogenförmig nach außen erstrecken. Da die Tragarme 110a, 110b sich durch die Positionierungsausnehmung erstrecken, bildet diese für die Tragarme eine Führung, welche bei einer Vertikalbewegung der Trageinheit die Bewegung der Tragarme vorgibt, wie dies unter Bezugnahme auf nachfolgende Figuren näher beschrieben wird.

Im unteren Abgabeabschnitt 30 des Vertikalförderers 1 ist bei der gezeigten Ausführungsform eine Ableiteinrichtung 50 mit einer bewegbaren Abgabeklappe 52 angeordnet. Die Ableiteinrichtung umfasst ferner ein schräg als Rutsche angeordnetes Ableitmittel 51, über welches die Stückgüter seitlich (im gezeigten Fall über die Vorderseite) abgegeben werden - beispielsweise in einen Zugriffsbereich für das Verkaufspersonal einer Apotheke oder in einen Vorratsbehälter.

Erfindungswesentlich ist u.a. die vertikale Verfahrbarkeit der Trageinheit. Bei der gezeigten Ausführungsform wird diese erreicht, indem eine Riementriebeinrichtung 60 bereitgestellt wird. Diese umfasst einen Antrieb 64, der auf einer Bodenplatte 14 angeordnet ist (siehe dazu Figur 13). Der Antrieb ist mit einem Antriebsrad 62 gekoppelt (Figur 2), das einen Treibriemen 61 antreibt. Dieser ist mit der Trageinheit 100 verbunden, so dass eine Bewegung des Treibriemens eine Vertikalbewegung der Trageinheit 100 bedingt. Im Aufnahmeabschnitt 20 ist die Umlenkrolle 63 des Riementriebes 60 angeordnet.

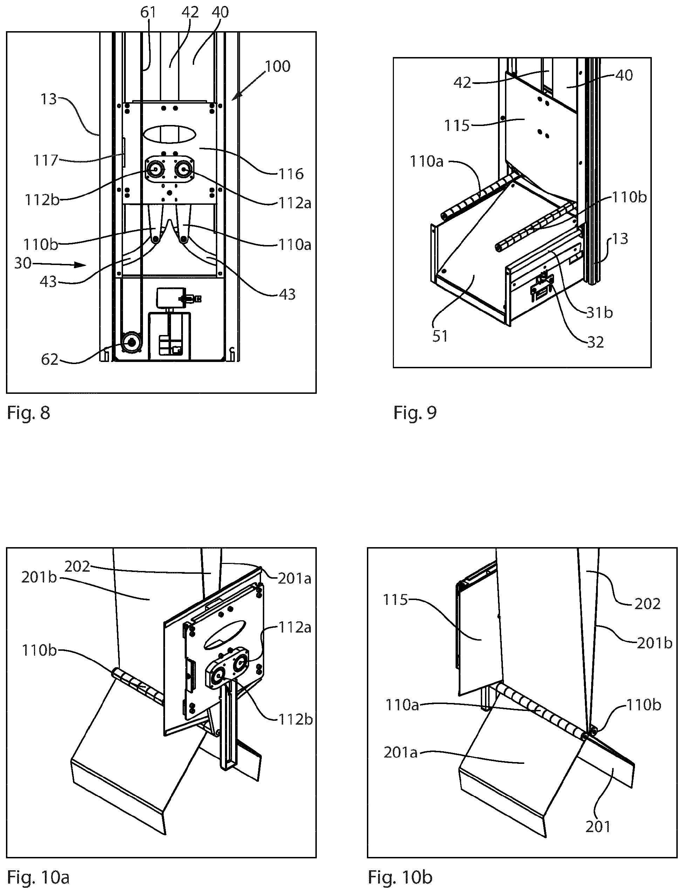

Figuren 8 und 9 zeigen Detailansichten der ersten Ausführungsform des erfindungsgemäßen Vertikalförderers im Bereich des Abgabeabschnittes 30, wobei Figur 8 eine Ansicht von hinten und Figur 9 eine Schrägansicht zeigt. In Figur 8 ist insbesondere die Anordnung des Antriebsrades 62 des Riementriebes dargestellt, und es ist zu erkennen, wie sich der Treibriemen 61 entlang der Rahmenstrebe 13 erstreckt. Ferner ist zu erkennen, dass eine Rückenplatte 116 der Trageinheit 100 über eine Halterung 117 mit dem Riementrieb 61 gekoppelt ist. In Figur 8 ist ferner gut zu erkennen, dass die Tragarme 110a, 110b mittels Schwenkachsen 112a, 112b schwenkbar gelagert ist. Wie bereits weiter oben erwähnt, umfasst die Positionierungsausnehmung einen Zuhalteabschnitt 42 sowie zwei Öffnungsabschnitte 43, die in Figur 8 gut zu erkennen sind. In Figur 8 ist eine Position dargestellt, bei welcher die Tragarme in die beiden Öffnungsabschnitte 43 eingreifen, d.h. dass in dieser Stellung sind die Tragarme 110a, 110b schon geringfügig horizontal auseinander bewegt wurden.

In Figur 9 ist eine Stellung gezeigt, in welcher die Tragarme 110a, 110b vollständig auseinandergefahren sind. Ferner ist im unteren Bereich des Vertikalförderers ein Ableitmittel 51 der Ableiteinrichtung zu erkennen. Dies ist schräg angeordnet, so dass Stückgüter nach vorne abgeleitet werden. Figur 9 ist ferner zu entnehmen, dass die Trageinheit 100 eine Stützplatte 115 umfasst, an welcher sich Stückgüter nach Übergabe in den Dämpfungsabschnitt abstützen können. Die Stützplatte 115 sowie die vordere Wand 11 (siehe Figur 1a) des Vertikalförderers 1 kann man bei der gezeigten Ausführungsform als Teile der Leiteinrichtung 200 auffassen, wobei deren Notwendigkeit von der genauen Ausgestaltung des Vertikalförderers abhängig ist. Je größer der Dämpfungsbereich 202 (im Vergleich zu den Stückgütern), so weniger notwendig sind vordere und hintere Führungsmittel. Auch hat die Form des Dämpfungsabschnitts Auswirkungen darauf, ob beispielsweise eine vordere Wandung 11 als Teil der Leiteinrichtung benötigt wird. Zwingend notwendig ist dies bei entsprechender Ausführung der Führungsmittel 201a, 201b aber nicht unbedingt. Eine vordere Wand wird aber zur Vermeidung der Sichtbarkeit des Inneren und Verminderung einer möglichen Verletzungsgefahr regelmäßig vorhanden sein.

Figuren 10a und 10b zeigen Schrägansichten der Kombination Führungsmittel 201a, 201b und Trageinheit 100 mit zwei Tragarmen 110a, 110b. Insbesondere ist zu erkennen, wie die beiden Tragarme 110a und 110b die bei dieser Ausführungsform bahnenartig ausgebildeten Führungsmittel 201a, 201b aus bzw. mit reversibel verformbarem Material umfassen und in der dargestellten Schließstellung oberhalb der Tragarme durch Abschnitte der Führungsmittel 201a, 201b ein Dämpfungsabschnitt 202 ausgebildet ist.

Figuren 11a, 11b und 12a, 12b zeigen Detailansichten der Trageinheit 100, wobei die Figuren 11a, 12a die Trageinheit in der Schließstellung und Figuren 11b und 12b die Trageinheit 100 in der Freigabestellung darstellen. Den Figuren ist noch einmal zu entnehmen, dass die Tragarme 110a, 110b an Schwenkachsen 112a, 112b gelagert sind. Insbesondere Figur 12b ist zu entnehmen, dass die Tragarme Betätigungsabschnitte aufweisen, von denen bei Figur 12a der Betätigungsabschnitt 111a des Tragarmes 110a angedeutet ist. Bei der gezeigten Ausführungsform durchgreifen die Betätigungsabschnitte die Positionierungsausnehmung und über den Verlauf der Positionierungsausnehmung wird die Horizontalbewegung der Tragarme gesteuert. Den Figuren ist ferner zu entnehmen, dass die Tragarme bei dieser Ausführungsform jeweils über eine Mehrzahl von Laufrollen 114 verfügen, deren Drehwiderstand situationsabhängig angepasst werden kann, das heißt daran, aus welchem Material genau das reversibel verformbare Material der Leiteinrichtung bereitgestellt ist und mit welchen Gewichten bei den zu transportierenden Stückgütern zu rechnen ist.

Figur 13 zeigt noch einmal eine Detailansicht des unteren Abschnittes des Vertikalförderers, und bei dieser Darstellung ist das Ableitmittel der Ableiteinrichtung fortgelassen und es ist zu erkennen, dass auf einer Bodenplatte 14 des Vertikalförderers ein Antrieb 64 des Riementriebes angeordnet ist. Ferner ist bei dieser Ansicht noch einmal zu erkennen, wie die Tragarme 110a, 110b von den Öffnungsabschnitten 43 der Positionierungsausnehmung geführt werden.

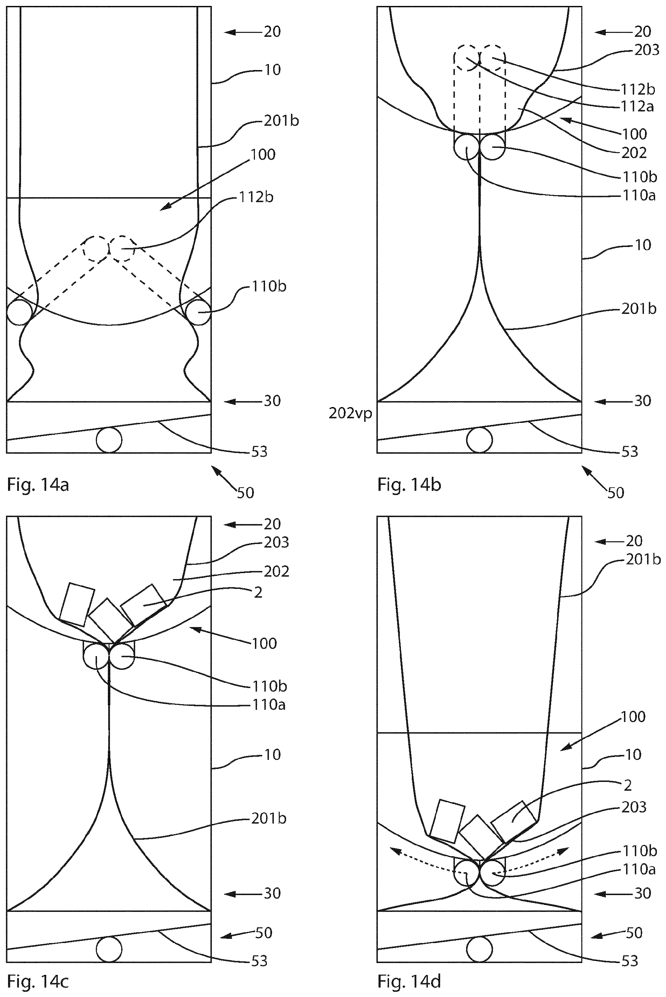

Unter Bezugnahme auf die Figuren 14a - 14d wird eine erste bevorzugte Ausführungsform des erfindungsgemäßen Verfahrens zum Transportieren von Stückgütern mit dem erfindungsgemäßen Vertikalförderer beschrieben, wobei die vorgenannten Figuren schematisch eine zweite Ausführungsform des erfindungsgemäßen Vertikalförderers zeigen. Bei den Figuren 14a - 14d sind alle nicht relevanten Merkmale fortgelassen und es ist lediglich schematisch angedeutet, wie genau das Verfahren zum Transportieren von Stückgütern durchgeführt wird.

In Figur 14a sind die Tragarme der Trageinheit 100 in der Freigabestellung dargestellt, das heißt sie sind nicht zusammengefahren und bilden keinen Dämpfungsabschnitt zur Aufnahme von Stückgütern. Es ist zu erkennen, dass in dem Vertikalförderer das erste und das zweite Führungsmittel 201a, 201b der Leiteinrichtung "lose" angeordnet sind, jedoch bei dem Aufnahmeabschnitt und dem Abgabeabschnitt an der Rahmenstruktur befestigt sind. Bei alternativen Ausführungsformen können die Führungsmittel auch "straffer" angeordnet sein, wenn beispielsweise Federn für einen Längenausgleich sorgen oder das reversibel verformbare Material der Führungsmittel elastische Eigenschaften hat.

Im unteren Abschnitt des Vertikalförderers ist eine Ableiteinrichtung 50 angedeutet, wobei diese Ableiteinrichtung ein verstellbares Ableitmittel 53 umfasst, mit welchem Stückgüter zur linken oder rechten Seite abgegeben werden können. Bei dem erfindungsgemäßen Verfahren zum vertikalen Transportieren von Stückgütern wird in einem ersten Schritt bei dem Aufnahmeabschnitt 20 ein Dämpfungsabschnitt 202 für Stückgüter bereitgestellt, indem die vertikal verfahrbare Trageinheit 100 hin zu dem Aufnahmeabschnitt 20 bewegt wird und die Tragarme aus der in Figur 14a gezeigten Freigabestellung horizontal in die Schließstellung bewegt werden, in welcher sie Führungsmittel 201, 201b in Form von zwei Bahnen zwischen sich einklemmen, wodurch oberhalb der zusammengefahrenen Tragarme durch Abschnitte der Führungsmittel 201, 201b ein Dämpfungsabschnitt 202 bereitgestellt wird, in welchen Stückgüter übergeben werden können. Bei der gezeigten Ausführungsform sind die beiden Abschnitte der Führungsmittel 201, 201b aufgrund der Eigenschaften der Führungsmittel (reversibel verformbares Material) als Dämpfungsbereiche 203 ausgebildet. Bei alternativen Ausführungsformen, bei denen beispielsweise nur ein Führungsmittel aus einem reversibel verformbaren Material verwendet wird, und das zweite Führungsmittel einfach eine (Seiten)Wandung des Vertikalförderers ist, wäre nur der Teilbereich des Dämpfungsbereichs ein Dämpfungsbereich, der von dem reversibel verformbaren Material bereitgestellt wird.

Sobald der Dämpfungsbereich 202 bereitgestellt ist, können Stückgüter in diesen übergeben werden, beispielsweise von einer Kommissioniervorrichtung für Verbrauchsgüter (Arzneimittelpackungen, Nahrungsergänzungsmittelpackungen etc.). Aufgrund der Beschaffenheit und Anordnung des reversibel verformbaren Materials und der Tragarme 110a, 110b weist der Dämpfungsabschnitt 202, wie der Name bereits sagt, dämpfende Eigenschaften auf, und zwar derart, dass die Fallbewegung der Stückgüter 2 gedämpft wird und so eine Beschädigung dieser vermieden wird. In Figur 14c ist dies angedeutet, indem das reversibel verformbare Material des Dämpfungsbereiches "ausgebeult" dargestellt ist. In Abhängigkeit von dem Gewicht und der Klemmkraft der Tragarme 110a, 110b kann es passieren, dass bei dem Dämpfen des Aufpralls von Stückgütern reversibel verformbares Material nach oben durchgezogen wird, wodurch im Bereich unterhalb des Dämpfungsabschnittes 202 gegebenenfalls eine Spannung in dem reversibel verformbaren Material 201 entsteht.

Nachdem die Stückgüter in den Dämpfungsabschnitt 202 überführt sind, wird die Trageinheit 100 mit zusammengefahrenen Tragarmen 110a, 110b zu dem Abgabeabschnitt 30 bewegt, wobei bei dieser Bewegung die Tragarme das reversibel verformbare Material kontinuierlich umformen, und zwar derart, dass sich der Dämpfungsabschnitt nach unten bewegt beziehungsweise dieser nach unten erweitert wird. Die Funktion des "Dämpfungsabschnittes" ist dann nicht mehr das Dämpfen als solches, sondern lediglich das Führen der in diesem Abschnitt angeordneten Stückgüter.

In Figur 14d ist angedeutet, dass die Tragarme hin zu dem Abgabeabschnitt bewegt wurden. Wird der Abgabeabschnitt erreicht, werden die Tragarme 110a, 110b der Trageinheit 100 aufgefahren, wie dies durch die beiden gestrichelten Pfeile der Figur 14d angedeutet ist. Sobald die sich bildende Öffnung groß genug ist, fallen die Stückgüter 2 schwerkraftbedingt auf das verstellbare Ableitmittel 53, welches die Stückgüter bei der gezeigten Ausführungsform nach "links" ableitet.

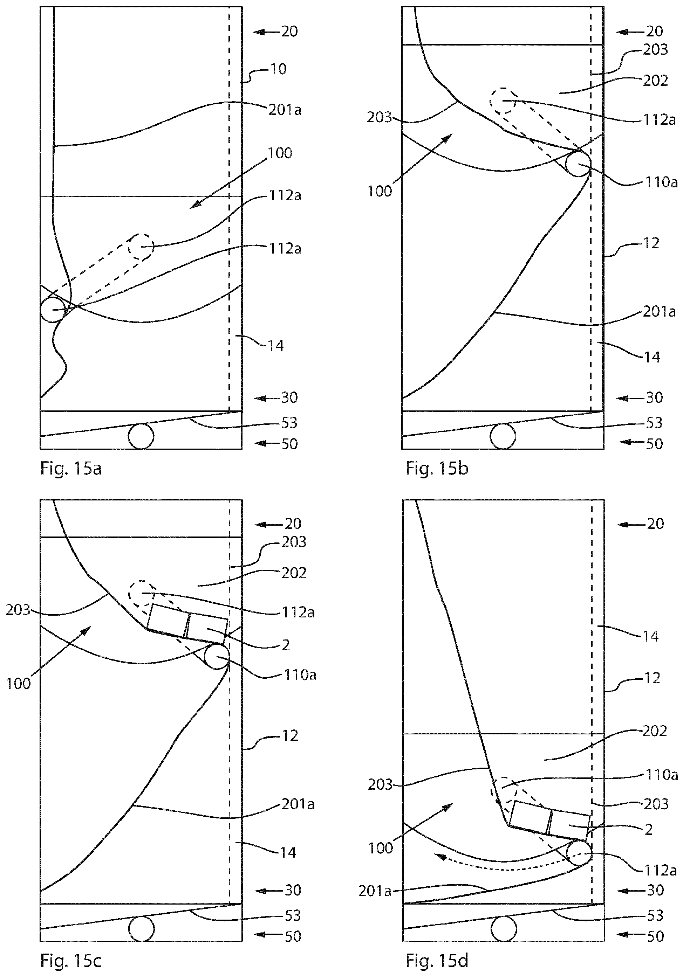

Unter Bezugnahme auf die Figuren 15a - 15d wird eine zweite bevorzugte Ausführungsform des erfindungsgemäßen Verfahrens zum Transportieren von Stückgütern mit dem erfindungsgemäßen Vertikalförderer beschrieben, wobei die vorgenannten Figuren schematisch eine dritte Ausführungsform des erfindungsgemäßen Vertikalförderers zeigen. Auch bei den Figuren 15a - 15d sind alle nicht relevanten Merkmale fortgelassen. Zur Vermeidung von Wiederholungen wird nachfolgend lediglich auf die Unterschiede zu den Ausführungsformen gemäß den Figuren 14a - 14d eingegangen.

Anders als bei den ersten Ausführungsformen des Vertikalförderers ist die Leiteinrichtung nicht durch zwei gleiche Führungsmittel gebildet, sondern durch zwei unterschiedliche, nämliche ein erstes Führungsmittel 201a aus / mit reversibel verformbarem Material (wie bei den ersten Ausführungsformen) und ein zweites Führungsmittel 12, welches durch eine Seitenwand des Vertikalförderers bereitgestellt wird. Die Trageinheit 100 umfasst dementsprechend nicht zwei, sondern nur einen mittig angeordneten Tragarm 110a, der aber ansonsten gleich aufgebaut und geführt ist. Das Ausbilden des Dämpfungsabschnittes 202 findet bei dieser Ausführungsform statt, indem der Tragarm 110a das erste Führungsmittel 201a gegen das zweite Führungsmittel 12 drückt. Bei der gezeigten Ausführungsform umfasst das zweite Führungsmittel eine reversibel verformbare Beschichtung 14, so dass auch bei dieser Ausführungsform alle Abschnitte der Führungsmittel oberhalb des Tragarms 110a dämpfende Eigenschaften haben, also als Dämpfungsbereiche 203 ausgebildet sind.

Verfahrenstechnisch ändert sich dadurch aber nichts - der Dämpfungsbereich wird bei Aufnahmeabschnitt 20 bereitgestellt, Stückgüter 2 werden übergeben, die Trageinheit 100 wird in Schließstellung nach unten verfahren. Anschließend wird der Tragarm 110a entsprechend dem Pfeil in Figur 15d nach links in die Freigabestellung geschwenkt und die Stückgüter werden abgegeben.

## Patentansprüche

1. Vertikalförderer (1) zum Transportieren von Stückgütern (2), aufweisend
eine Rahmenstruktur (10) mit einem Aufnahmeabschnitt (20) und einem Abgabeabschnitt (30) für Stückgüter,
eine vertikal ausgerichtete Leiteinrichtung (200) zum geführten vertikalen Bewegen von Stückgütern mit einem ersten Führungsmittel (201a) mit einem reversibel verformbaren Material und zumindest einem zweiten Führungsmittel (201b, 12), wobei das erste Führungsmittel (201a) bei dem Aufnahmeabschnitt (20) und dem Abgabeabschnitt (30) an der Rahmenstruktur (10) befestigt ist,
eine vertikal zwischen Aufnahmeabschnitt (20) und Abgabeabschnitt (30) verfahrbare Trageinheit (100) mit zumindest einem horizontal zwischen einer Schließstellung und einer Freigabestellung verfahrbaren Tragarm (110a, 110b),
wobei der Tragarm (110a, 110b) das erste Führungsmittel (201a) zumindest abschnittweise umfasst und
wobei das erste und zweite Führungsmittel (201a; 201b, 12) der Leiteinrichtung (200) und der Tragarm (110a, 110b) derart ausgebildet sind, dass der Tragarm (110a, 110b) das erste Führungsmittel (201a) bei einer Vertikalbewegung des Tragarms zumindest teilweise reversible verformt und in der Schließstellung aus dem ersten Führungsmittel (201a) und dem zweiten Führungsmittel (201b, 12) einen von einem Stückgut zumindest abschnittsweise reversibel verformbaren Dämpfungsabschnitt (202) formt, der eine Abwärtsbewegung des Stückguts verhindert,
wobei der Vertikalförderer (1) eine vertikale ausgerichtete Tragarmstelleinrichtung (40) mit einer Positionierungsausnehmung (41) aufweist, und dass ein Tragarm (110a, 110b) einen Betätigungsabschnitt (111a, 111b) aufweist, der in die Positionierungsausnehmung (41) eingreift, wobei die Positionierungsausnehmung (41) einen Zuhalteabschnitt (42) und zumindest einen Öffnungsabschnitt (43) aufweist, wobei ein Öffnungsabschnitt bei einer Vertikalbewegung der Trageinheit (100) eine horizontale Bewegung eines Tragarms (110a, 110b) bewirkt, wobei ein Tragarm (110a, 110b) schwenkbar an der Trageinheit befestigt und ein Öffnungsabschnitt kreisbogenförmig ausgebildet ist.

2. Vertikalförderer (1) zum Transportieren von Stückgütern (2) nach Anspruch 1, **dadurch gekennzeichnet, dass** das zweite Führungsmittel (12) zumindest abschnittsweise eine reversibel verformbare Beschichtung (14) aufweist.

3. Vertikalförderer (1) zum Transportieren von Stückgütern (2) nach Anspruch 1, **dadurch gekennzeichnet, dass** der Vertikalförderer (1) zwei Tragarme (110a, 110b) umfasst und dass auch das zweite Führungsmittel (201b) ein reversibel verformbares Material umfasst.

4. Vertikalförderer (1) zum Transportieren von Stückgütern (2) nach einem der Ansprüche 1 - 3, **dadurch gekennzeichnet, dass** ein Tragarm (110a, 110b) in einem Kontaktbereich mit dem reversibel verformbaren Material eines Führungsmittels (201a, 201b) zumindest eine drehbare Laufrolle (114) aufweist.

5. Vertikalförderer (1) zum Transportieren von Stückgütern (2) nach einem der Ansprüche 3 oder 4, **dadurch gekennzeichnet, dass** das erste und zweite Führungsmittel (201a, 201b) aus reversibel verformbaren Material durch zwei parallele vertikal ausgerichtete Gewebebahnen bereitgestellt sind, die jeweils bei dem Aufnahmeabschnitt (20) und dem Abgabeabschnitt (30) an der Rahmenstruktur (10) befestigt sind.

6. Vertikalförderer (1) zum Transportieren von Stückgütern (2) nach einem der Ansprüche 1 - 5, **dadurch gekennzeichnet, dass** ein Führungsmittel (201a, 201b) aus einem reversibel verformbaren Material vorgespannt bei dem Aufnahmeabschnitt (20) und/oder dem Abgabeabschnitt (30) an der Rahmenstruktur befestigt ist.

7. Vertikalförderer (1) zum Transportieren von Stückgütern (2) nach einem der Ansprüche 1 - 6, **dadurch gekennzeichnet, dass** der Vertikalförderer eine Ableiteinrichtung (50) umfasst, mit welcher Stückgüter seitlich abgeführt werden.

8. Vertikalförderer (1) zum Transportieren von Stückgütern (2) nach Anspruch 7, **dadurch gekennzeichnet, dass** die Ableiteinrichtung (50) ein verstellbares Ableitmittel (53) umfasst.

9. Vertikalförderer (1) zum Transportieren von Stückgütern (2) nach einem der Ansprüche 1 - 8, **dadurch gekennzeichnet, dass** der Vertikalförderer einen Riemenantrieb (60) mit einem vertikal angeordneten Treibriemen (61) umfasst, er mit der Trageinheit (100) gekoppelt ist und diese vertikal bewegt.

10. Verfahren zum vertikalen Transportieren von Stückgütern mit einem Vertikalförderer nach einem der Ansprüche 1 - 9, wobei
bei einem Aufnahmeabschnitt (20) einer Rahmenstruktur (10) eines Vertikalförderers (1) aus einem ersten Führungsmittel (201a) mit einem reversibel verformbaren Material und zumindest einem zweiten Führungsmittel (201b, 12) ein Dämpfungsabschnitt (202) mit einem Dämpfungsbereich (203) für Stückgüter bereitgestellt wird, indem eine vertikal verfahrbare Trageinheit (100) mit zumindest einem horizontal verfahrbaren Tragarm (110a, 110b), der das erstes Führungsmittel (201a) aus einem reversibel verformbares Material zumindest abschnittsweise umfasst, zu dem Aufnahmeabschnitt (20) bewegt und der Tragarm (110a, 110b) horizontal hin zu dem zweiten Führungsmittel (201b, 12) in eine Schließstellung bewegt wird, die eine Vertikalbewegung von Stückgütern verhindert,
zumindest ein Stückgut dem Dämpfungsbereich (203) des Dämpfungsabschnitts (202) übergeben wird, wobei das zumindest eine Stückgut das reversibel verformbare Material verformt und das reversibel verformbare Material einen Aufprall des Stückguts dämpft,
die Trageinheit (100) in der Schließstellung zu einem Abgabeabschnitt (30) der Rahmenstruktur (10) bewegt wird, wobei bei dem Bewegen der Trageinheit (100) ein das reversible Material (201a, 201b) zumindest abschnittsweise umfassender Tragarm (110a, 110b) das reversibel verformbare Material bei der Bewegung kontinuierlich umformt und so den Dämpfungsabschnitt (202) nach unten bewegt, und
bei dem Erreichen des Abgabeabschnitts (30) der Tragarm (110a, 110b) in eine Freigabestellung aufgefahren wird, so dass das zumindest eine Stückgut durch die sich bildende Öffnung abgegeben wird.

## Claims

1. A vertical conveyor (1) for transporting piece goods (2), having
a frame structure (10) with a receiving portion (20) and a delivery portion (30) for piece goods,
a vertically oriented guide device (200) for the guided vertical movement of piece goods with a first guide means (201a) with a reversibly deformable material and at least one second guide means (201b, 12), wherein the first guide means (201a) is fastened to the frame structure (10) at the receiving portion (20) and the delivery portion (30),
a support unit (100) which can be moved vertically between the receiving portion (20) and the delivery portion (30) and has at least one support arm (110a, 110b) which can be moved horizontally between a closed position and a release position,
wherein the support arm (110a, 110b) at least in portions clasps the first guide means (201a), and
wherein the first and second guide means (201a; 201b, 12) of the guide device (200) and the support arm (110a, 110b) are designed such that the support arm (110a, 110b) at least in portions reversibly deforms the first guide means (201a) during a vertical movement of the support arm and, in the closed position, forms from the first guide means (201a) and the second guide means (201b, 12) a damping portion (202) which can be at least in portions reversibly deformed by a piece good and which prevents a downward movement of the piece good,
wherein the vertical conveyor (1) has a vertically oriented support arm adjusting device (40) with a positioning recess (41), and that a support arm (110a, 110b) has an actuating portion (111a, 111b) which engages in the positioning recess (41), wherein the positioning recess (41) has a locking portion (42) and at least one opening portion (43), wherein an opening portion causes a horizontal movement of a support arm (110a, 110b) during a vertical movement of the support unit (100), wherein a support arm (110a, 110b) is pivotally attached to the support unit and an opening portion is formed in the shape of a circular arc.

2. The vertical conveyor (1) for transporting piece goods (2) according to claim 1, **characterized in that** the second guide means (12) has at least in portions a reversibly deformable coating (14).

3. The vertical conveyor (1) for transporting piece goods (2) according to claim 1, **characterized in that** the vertical conveyor (1) comprises two support arms (110a, 110b), and that the second guide means (201b) also comprises a reversibly deformable material.

4. The vertical conveyor (1) for transporting piece goods (2) according to any of claims 1-3, **characterized in that** a support arm (110a, 110b) has at least one rotatable roller (114) in a contact region with the reversibly deformable material of a guide means (201a, 201b).

5. The vertical conveyor (1) for transporting piece goods (2) according to any of claims 3 or 4, **characterized in that** the first and second guide means (201a, 201b) made of reversibly deformable material are provided by two parallel, vertically oriented fabric webs which are each fastened to the frame structure (10) at the receiving portion (20) and the delivery portion (30).

6. The vertical conveyor (1) for transporting piece goods (2) according to any of claims 1-5, **characterized in that** a guide means (201a, 201b) made of a reversibly deformable material is pre-tensioned and fastened to the frame structure at the receiving portion (20) and/or the delivery portion (30).

7. The vertical conveyor (1) for transporting piece goods (2) according to any of claims 1-6, **characterized in that** the vertical conveyor comprises a discharge device (50) with which piece goods are removed laterally.

8. The vertical conveyor (1) for transporting piece goods (2) according to claim 7, **characterized in that** the discharge device (50) comprises an adjustable discharge means (53).

9. The vertical conveyor (1) for transporting piece goods (2) according to any of claims 1-8, **characterized in that** the vertical conveyor comprises a belt drive (60) with a vertically arranged drive belt (61) that is coupled to the support unit (100) and moves it vertically.

10. A method for vertically transporting piece goods with a vertical conveyor according to any of claims 1 to 9, wherein,
in a receiving portion (20) of a frame structure (10) of a vertical conveyor (1) made of a first guide means (201a) with a reversibly deformable material and at least one second guide means (201b, 12), a damping portion (202) with a damping region (203) for piece goods is provided, in that a vertically movable support unit (100) with at least one horizontally movable support arm (110a, 110b), which at least in portions clasps the first guide means (201a) made of a reversibly deformable material, is moved to the receiving portion (20), and the support arm (110a, 110b) is moved horizontally towards the second guide means (201b, 12) into a closed position which prevents vertical movement of piece goods,
at least one piece good is transferred to the damping region (203) of the damping portion (202), wherein the at least one piece good deforms the reversibly deformable material, and the reversibly deformable material dampens an impact of the piece good,
the support unit (100) is moved in the closed position to a delivery portion (30) of the frame structure (10), wherein, during the movement of the support unit (100), a support arm (110a, 110b) at least in portions clasping the reversible material (201a, 201b) continuously deforms the reversibly deformable material during the movement and thereby moves the damping portion (202) downwards, and,
upon reaching the delivery portion (30), the support arm (110a, 110b) is moved into a release position so that the at least one piece good is discharged through the forming opening.

## Revendications

1. Convoyeur vertical (1) pour le transport de marchandises (2), comprenant
une structure de châssis (10) avec une section de réception (20) et une section de déchargement (30) pour les marchandises,
un dispositif de guidage (200) orienté verticalement pour le déplacement vertical guidé des marchandises, avec un premier moyen de guidage (201a) en matériau déformable de manière réversible et au moins un deuxième moyen de guidage (201b, 12), le premier moyen de guidage (201a) étant fixé à la structure de châssis (10) au niveau de la section de réception (20) et de la section de déchargement (30),
une unité de support (100) déplaçable verticalement entre la section de réception (20) et la section de déchargement (30) avec au moins un bras porteur (110a, 110b) pouvant se déplacer horizontalement entre une position de fermeture et une position de libération,
le bras porteur (110a, 110b) entourant le premier moyen de guidage (201a) au moins par sections et
le premier et le deuxième moyen de guidage (201a ; 201b, 12) du dispositif de guidage (200) et le bras porteur (110a, 110b) sont conçus de telle sorte que le bras porteur (110a, 110b) déforme au moins partiellement de manière réversible le premier moyen de guidage (201a) lors d'un mouvement vertical du bras porteur et forme, dans la position de fermeture, du premier moyen de guidage (201a) et du deuxième moyen de guidage (201b, 12), une section d'amortissement (202) déformable de manière réversible au moins par sections par une marchandise et empêchant un mouvement vers le bas du marchandise,
le convoyeur vertical (1) comportant un dispositif de positionnement de bras porteur (40) orienté verticalement avec un évidement de positionnement (41), et en ce qu'un bras porteur (110a, 110b) comporte une partie d'actionnement (111a, 111b) qui s'engage dans l'évidement de positionnement (41), l'évidement de positionnement (41) comportant une section de verrouillage (42) et au moins une section d'ouverture (43), une section d'ouverture provoquant un mouvement horizontal d'un bras porteur (110a, 110b) lors d'un mouvement vertical de l'unité de support (100), un bras porteur (110a, 110b) étant fixé de manière pivotante à l'unité de support et une section d'ouverture étant réalisée en forme d'arc de cercle.

2. Convoyeur vertical (1) pour le transport de marchandises (2) selon la revendication 1, **caractérisé en ce que** le deuxième moyen de guidage (12) présente au moins par sections un revêtement déformable de manière réversible (14).

3. Convoyeur vertical (1) pour le transport de marchandises (2) selon la revendication 1, **caractérisé en ce que** le convoyeur vertical (1) comprend deux bras porteurs (110a, 110b) et **en ce que** le deuxième moyen de guidage (201b) comprend également un matériau déformable de manière réversible.

4. Convoyeur vertical (1) pour le transport de marchandises (2) selon l'une des revendications 1 à 3, **caractérisé en ce qu'**un bras porteur (110a, 110b) présente, dans une zone de contact avec le matériau déformable de manière réversible d'un moyen de guidage (201a, 201b), au moins un galet de roulement rotatif (114).

5. Convoyeur vertical (1) pour le transport de marchandises (2) selon l'une des revendications 3 ou 4, **caractérisé en ce que** le premier et le deuxième moyens de guidage (201a, 201b) sont constitués d'un matériau déformable de manière réversible par deux bandes de tissu parallèles orientées verticalement, qui sont fixées à la structure de châssis (10) respectivement au niveau de la section de réception (20) et de la section de déchargement (30).

6. Convoyeur vertical (1) pour transporter des marchandises (2) selon l'une des revendications 1 à 5, **caractérisé en ce qu'**un moyen de guidage (201a, 201b) en matériau déformable de manière réversible est fixé de manière précontrainte à la structure du châssis au niveau de la section de réception (20) et/ou de la section de déchargement (30).

7. Convoyeur vertical (1) pour le transport de marchandises (2) selon l'une des revendications 1 à 6, **caractérisé en ce que** le convoyeur vertical comprend un dispositif de déviation (50) permettant d'évacuer latéralement les marchandises.

8. Convoyeur vertical (1) pour le transport de marchandises (2) selon la revendication 7, **caractérisé en ce que** le dispositif de déviation (50) comprend un moyen de déviation réglable (53).

9. Convoyeur vertical (1) pour le transport de marchandises (2) selon l'une des revendications 1 à 8, **caractérisé en ce que** le convoyeur vertical comprend un entraînement à courroie (60) avec une courroie d'entraînement (61) disposée verticalement, qui est couplée à l'unité de support (100) et la déplace verticalement.

10. Procédé pour le transport vertical de marchandises à l'aide d'un convoyeur vertical selon l'une des revendications 1 à 9, dans lequel
au niveau d'une section de réception (20) d'une structure de châssis (10) d'un convoyeur vertical (1) une section d'amortissement (202) avec une zone d'amortissement (203) pour des marchandises est prévue constituée d'un premier moyen de guidage (201a) avec un matériau déformable de manière réversible et au moins un deuxième moyen de guidage (201b, 12), en déplaçant une unité de support (100) déplaçable verticalement avec au moins un bras porteur déplaçable horizontalement (110a, 110b), qui entoure le premier moyen de guidage (201a) en un matériau déformable de manière réversible au moins par sections, est déplacée vers la section de réception (20) et le bras porteur (110a, 110b) est déplacé horizontalement vers le deuxième moyen de guidage (201b, 12) dans une position de fermeture qui empêche un déplacement vertical des marchandises,
au moins une marchandise est transférée à la zone d'amortissement (203) de la section d'amortissement (202), la au moins une marchandise déformant le matériau déformable de manière réversible et le matériau déformable de manière réversible amortissant un choc de la marchandise,
l'unité de support (100) est déplacée dans la position de fermeture vers une section de déchargement (30) de la structure de châssis (10), dans lequel, lors du déplacement de l'unité de support (100), un bras porteur (110a, 110b) entourant au moins en partie le matériau réversible (201a, 201b) déforme en continu le matériau déformable de manière réversible lors du déplacement et déplace ainsi la section d'amortissement (202) vers le bas, et
lors de l'atteinte de la partie de déchargement (30), le bras porteur (110a, 110b) est relevé dans une position de libération, de sorte que le au moins une marchandise est déchargés à travers l'ouverture qui se forme.
